# EUROPEAN PATENT APPLICATION

(11) **EP 3 591 669 A1**
(43) Date of publication of application: **08.01.2020**
(21) Application number: 18181866.7
(22) Date of filing: 05.07.2018
(51) Int. Cl.: H01B 3/30, C08K 7/06, C08K 7/14, H01B 3/42

(54) **ARTICLES AND STRUCTURES INCLUDING LOW DIELECTRIC CONSTANT POLYMER FILMS AND METHODS OF MAKING THEM**

(71) Applicant: SABIC Global Technologies B.V., 4612 PX Bergen op Zoom (NL)
(72) Inventor: SONG, Shijie, Shanghai, 201109 (CN); CHENG, Yunan, Shanghai, 201203 (CN); ZHOU, Yuan, Shanghai (CN)
(74) Representative: Elzaburu S.L.P.

(57) **Abstract**

A thermoplastic film includes a thermoplastic polymer component; the thermoplastic film has a thickness of less than 200 micrometers (µm) and a dielectric constant (Dk) of 3.0 or less at a radio frequency of from 1 gigahertz (GHz) to 77 GHz. A method for making a thermoplastic film includes a thermoplastic polymer component, the method including extruding the thermoplastic film to a thickness of less than 200 micrometers (µm). The thermoplastic film has a dielectric constant (Dk) of 3.0 or less at a radio frequency of from 1 gigahertz (GHz) to 77 GHz.

## Description

### FIELD OF THE DISCLOSURE

The present disclosure relates to thermoplastic films having good dielectric properties, and in particular to thermoplastic films having a thickness of less than 200 microns.

### BACKGROUND OF THE DISCLOSURE

With the wireless communication technology stepping into 5G (the 5th generation of wireless communication), the radio frequency range used for wireless data transfer will expand from UHF (Ultra high frequency range up to 5Ghz) to SHF (super high frequency range from 5Ghz to 30Ghz) or even to EHF (extremely high frequency range from 30Ghz to 300Ghz), which helps to support very high data transfer speeds. However, compared with UHF, SHF and EHF devices will face much higher path lose due to environmental factors such as the supporting or housing material around the devices.

Traditional injection-molded parts made by polymeric resin such polycarbonate (PC), PC and acrylonitrile butadiene styrene (ABS) blends, and polyamide are suitable for UHF devices such as antenna substrates or housings in 3G and 4G mobile devices, wearable devices or base stations. However, if these materials are placed into devices operating in the SHF or EHF frequency ranges, concerns regarding the dielectric performance (dielectric constant (Dk)/dissipation factor (Df)) of these materials are raised because their current Dk/Df levels negatively impact device performance. Accordingly, it is desirable to identify lower Dk and Df polymeric substrates through formulation, processing or a combination thereof.

These and other shortcomings are addressed by aspects of the present disclosure.

### SUMMARY

Aspects of the disclosure relate to a thermoplastic film including a thermoplastic polymer component, wherein the thermoplastic film has a thickness of less than 200 micrometers (µm) and a dielectric constant (Dk) of 3.0 or less at a radio frequency of from 1 gigahertz (GHz) to 77 GHz.

Aspects of the disclosure further relate to a method for making a thermoplastic film including a thermoplastic polymer component, the method including extruding the thermoplastic film to a thickness of less than 200 micrometers (µm), wherein the thermoplastic film has a dielectric constant (Dk) of 3.0 or less at a radio frequency of from 1 gigahertz (GHz) to 77 GHz.

### DETAILED DESCRIPTION

The present disclosure relates to thermoplastic films and methods for making them that include a low Dk substrate for use in UHF and SHF applications. The thermoplastic film includes a layer of thin film including a polymer resin formed from extrusion, laminate, thermal-forming, or other forming processes. It has been found that by extruding the thermoplastic film below a certain thickness, their Dk value can be significantly reduced. In addition, by using this film by itself or by combining it with another part through a co-extrusion or laminate or other process, a low Dk substrate useful as an antenna or cable for UHF, SHF and even EHF applications can be formed.

The present disclosure can be understood more readily by reference to the following detailed description of the disclosure and the Examples included therein. In various aspects, the present disclosure pertains to a thermoplastic film including a thermoplastic polymer component, wherein the thermoplastic film has a thickness of less than 200 micrometers (µm) and a dielectric constant (Dk) of 3.0 or less at a radio frequency of from 1 gigahertz (GHz) to 77 GHz.

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that an order be inferred, in any respect. This holds for any possible non-express basis for interpretation, including: matters of logic with respect to arrangement of steps or operational flow; plain meaning derived from grammatical organization or punctuation; and the number or type of embodiments described in the specification.

All publications mentioned herein are incorporated herein by reference to disclose and describe the methods and/or materials in connection with which the publications are cited.

### Definitions

It is also to be understood that the terminology used herein is for the purpose of describing particular aspects only and is not intended to be limiting. As used in the specification and in the claims, the term "comprising" can include the embodiments "consisting of' and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a thermoplastic polymer component" includes mixtures of two or more thermoplastic polymer components.

As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated ±10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

As used herein, the terms "optional" or "optionally" means that the subsequently described event or circumstance can or cannot occur, and that the description includes instances where said event or circumstance occurs and instances where it does not. For example, the phrase "optional additional processes" means that the additional processes can or cannot be included and that the description includes methods that both include and that do not include the additional processes.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

The terms "BisA," "BPA," or "bisphenol A," which can be used interchangeably, as used herein refers to a compound having a structure represented by the formula: 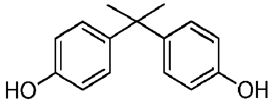 BisA can also be referred to by the name 4,4'-(propane-2,2-diyl)diphenol; p,p'-isopropylidenebisphenol; or 2,2-bis(4-hydroxyphenyl)propane. BisA has the CAS # 80-05-7.

As used herein, "polycarbonate" refers to an oligomer or polymer comprising residues of one or more dihydroxy compounds, e.g., dihydroxy aromatic compounds, joined by carbonate linkages; it also encompasses homopolycarbonates, copolycarbonates, and (co)polyester carbonates.

The terms "residues" and "structural units", used in reference to the constituents of the polymers, are synonymous throughout the specification.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation are equal to 100.

Unless otherwise stated to the contrary herein, all test standards are the most recent standard in effect at the time of filing this application.

Each of the materials disclosed herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

### Thermoplastic Film

Aspects of the disclosure relate to a thermoplastic film including a thermoplastic polymer component. The thermoplastic film has a thickness of less than 200 micrometers (µm) and a dielectric constant (Dk) of 3.0 or less at a radio frequency of from 1 gigahertz (GHz) to 77 GHz.

In some aspects the thermoplastic film is extruded. It is believed that extruding the thin (< 200 µm) film causes orientation of the macromolecular chains of the thermoplastic polymer component, resulting in lower Dk properties for the thermoplastic film than the Dk that would be expected for a film having that thickness based on normalized Dk values.

The thermoplastic polymer component can include any suitable thermoplastic polymer. Examples include, but are not limited to, polycarbonate, polyetherimide, liquid crystal polymer, polyamide, polyimide, polyester, copolymers thereof, blends thereof, or combinations thereof.

In certain aspects the thermoplastic film has a Dk that is at least 0.2 lower than that of a substantially identical comparative injection molded thermoplastic film having a thickness of 1000 µm. As used herein a "substantially identical comparative injection molded thermoplastic film" is a thermoplastic film including the same content of thermoplastic polymer component, filler component (if included) and any other included additives as the disclosed thermoplastic film, except that the comparative thermoplastic film is injection molded and has a thickness of 1000 µm.

In further aspects the thermoplastic film has a Dk that is at least 5% lower than that of a substantially identical comparative injection molded thermoplastic film having a thickness of 1000 µm. In yet further aspects the thermoplastic film has a Dk that is from 5% to 20% lower than that of a substantially identical comparative injection molded thermoplastic film having a thickness of 1000 µm.

In some aspects the thermoplastic film includes a filler component. The filler component may include, but is not limited to, carbon fibers, glass fibers, ceramic fibers, milled fibers, minerals or a combination thereof.

### Methods for Making a Thermoplastic Film

Aspects of the disclosure further relate to methods for making a thermoplastic film including a thermoplastic polymer component. The method includes extruding the thermoplastic film to a thickness of less than 200 micrometers (µm). The thermoplastic film has a dielectric constant (Dk) of 3.0 or less at a radio frequency of from 1 gigahertz (GHz) to 77 GHz.

The thermoplastic polymer component can include any suitable thermoplastic polymer. Examples include, but are not limited to, polycarbonate, polyetherimide, liquid crystal polymer, polyamide, polyimide, polyester, copolymers thereof, blends thereof, or combinations thereof.

In certain aspects the thermoplastic film has a Dk that is at least 0.2 lower than that of a substantially identical comparative injection molded thermoplastic film having a thickness of 1000 µm.

In further aspects the thermoplastic film has a Dk that is at least 5% lower than that of a substantially identical comparative injection molded thermoplastic film having a thickness of 1000 µm. In yet further aspects the thermoplastic film has a Dk that is from 5% to 20% lower than that of a substantially identical comparative injection molded thermoplastic film having a thickness of 1000 µm.

In some aspects the thermoplastic film includes a filler component. The filler component may include, but is not limited to, carbon fibers, glass fibers, ceramic fibers, milled fibers, minerals or a combination thereof.

As noted, the method includes extruding the thermoplastic film to a thickness of less than 200 µm. Other processes could also be applied to the thin thermoplastic film, including but not limited to lamination, co-extrusion, thermo-forming or hot pressing. In such aspects, further layers of other materials (e.g., other thermoplastic polymer layers, metallic layers, etc.) could be combined with the thermoplastic film.

### Articles Including the Thermoplastic Film

Aspects of the disclosure further relate to articles including the thermoplastic film described herein. In some aspects the article is a telecommunications device for use in a super high frequency (SHF) or extremely high frequency (EHF) frequency range. In particular aspects the article is an antenna or a cable for use in SHF or EHF applications.

Various combinations of elements of this disclosure are encompassed by this disclosure, e.g., combinations of elements from dependent claims that depend upon the same independent claim.

### Aspects of the Disclosure

In various aspects, the present disclosure pertains to and includes at least the following aspects.
Aspect 1. A thermoplastic film comprising a thermoplastic polymer component, wherein the thermoplastic film has a thickness of less than 200 micrometers (µm) and a dielectric constant (Dk) of 3.0 or less at a radio frequency of from 1 gigahertz (GHz) to 77 GHz.
Aspect 2. The thermoplastic film according to Aspect 1, wherein the thermoplastic film is extruded.
Aspect 3. The thermoplastic film according to Aspect 1 or 2, wherein the thermoplastic polymer component comprises polycarbonate, polyetherimide, liquid crystal polymer, polyamide, polyimide, polyester, copolymers thereof, or blends thereof.
Aspect 4. The thermoplastic film according to any of Aspects 1 to 3, wherein the thermoplastic film is extruded and the Dk of the thermoplastic film is at least 0.2 lower than that of a substantially identical comparative injection molded thermoplastic film having a thickness of 1000 µm.
Aspect 5. The thermoplastic film according to any of Aspects 1 to 4, wherein the thermoplastic film is extruded and the Dk of the thermoplastic film is at least 5% lower than that of a substantially identical comparative injection molded thermoplastic film having a thickness of 1000 µm.
Aspect 6. The thermoplastic film according to any of Aspects 1 to 5, wherein the thermoplastic film is extruded and the Dk of the thermoplastic film is from 5% to 20% lower than that of a substantially identical comparative injection molded thermoplastic film having a thickness of 1000 µm.
Aspect 7. The thermoplastic film according to any of Aspects 1 to 6, wherein the thermoplastic film further comprises a filler component.
Aspect 8. The thermoplastic film according to Aspect 7, wherein the filler component comprises carbon fibers, glass fibers, ceramic fibers, milled fibers, minerals or a combination thereof.
Aspect 9. An article comprising the thermoplastic film according to any of Aspects 1 to 8.
Aspect 10. The article according to Aspect 9, wherein the article is a telecommunications device for use in a super high frequency (SHF) or extremely high frequency (EHF) frequency range.
Aspect 11. A method for making a thermoplastic film comprising a thermoplastic polymer component, the method comprising extruding the thermoplastic film to a thickness of less than 200 micrometers (µm), wherein the thermoplastic film has a dielectric constant (Dk) of 3.0 or less at a radio frequency of from 1 gigahertz (GHz) to 77 GHz.
Aspect 12. The method according to Aspect 11, wherein the thermoplastic polymer component comprises polycarbonate, polyetherimide, polyamide, liquid crystal polymer, polyimide, polyester, copolymers thereof, or blends thereof.
Aspect 13. The method according to Aspect 11 or 12, wherein the Dk of the thermoplastic film is at least 0.2 lower than that of a substantially identical comparative injection molded thermoplastic film having a thickness of 1000 µm.
Aspect 14. The method according to any of Aspects 11 to 13, wherein the Dk of the thermoplastic film is at least 5% lower than that of a substantially identical comparative injection molded thermoplastic film having a thickness of 1000 µm.
Aspect 15. The method according to any of Aspects 11 to 14, wherein the Dk of the thermoplastic film is from 5% to 20% lower than that of a substantially identical comparative injection molded thermoplastic film having a thickness of 1000 µm.
Aspect 16. The method according to any of Aspects 11 to 15, wherein the thermoplastic film further comprises a filler component.
Aspect 17. The method according to Aspect 16, wherein the filler component comprises carbon fibers, glass fibers, ceramic fibers, milled fibers, minerals or a combination thereof.
Aspect 18. An article comprising the thermoplastic film according formed according to the method of any of Aspects 11 to 17.
Aspect 19. The article according to Aspect 18, wherein the article is a telecommunications device for use in a super high frequency (SHF) or extremely high frequency (EHF) frequency range.

### EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of reaction conditions, e.g., component concentrations, desired solvents, solvent mixtures, temperatures, pressures and other reaction ranges and conditions that can be used to optimize the product purity and yield obtained from the described process. Only reasonable and routine experimentation will be required to optimize such process conditions.

Various thermoplastic films were formed as shown in Table 1. Film A, Film B and comparative Plaque 1 were formed from bisphenol-A (BPA) polycarbonate (DX11355, available from SABIC); Film C and comparative Plaque 2 were formed from polyetherimide (PEI) (Ultem® 1000, available from SABIC). The films were made with the indicated thickness to demonstrate the effect of thickness on dielectric performance. Both comparative plaques having a thickness of 1000 micron (µm) were injection molded; Films A, B and C were made from an extrusion process.

**Table 1**

| | **Base Resin** | **Thickness (um)** | **Width (mm)** | **Surface Texture** |
|---|---|---|---|---|
| Plaque 1 | BPA Polycarbonate | 1000 | 100 | Polish |
| Film A | BPA Polycarbonate | 375 | 100 | Polish |
| Film B | BPA Polycarbonate | 150 | 100 | Polish |
| Plaque 2 | Polyetherimide | 1000 | 100 | Polish |
| Film C | Polyetherimide | 50 | 100 | Polish |

The dielectric constant (Dk) were tested at 1.1 Ghz, 1.9 Ghz, 5 Ghz, 10 Ghz, 20 Ghz, 24 Ghz and 60 Ghz as shown in Table 2:

**Table 2**

| **Frequency (Ghz)** | **Network Analyzer** | **Method** | **Condition** |
|---|---|---|---|
| 1.1 | Agilent E8363B | Split Post Dielectric Resonator | Room Temperature |
| 1.9 | Agilent E8363B | Split Post Dielectric Resonator | Room Temperature |
| 5.0 | Agilent E8363B | Split Post Dielectric Resonator | Room Temperature |
| 10 | Agilent E8363B | Split Post Dielectric Resonator | Room Temperature |
| 20 | Agilent E8363B | Split Post Dielectric Resonator | Room Temperature |
| 24 | Agilent E8361A | Fabry-Perot open type Resonator | Room Temperature |
| 60 | Agilent E8361A | Fabry-Perot open type Resonator | Room Temperature |

Dielectric performance of the polycarbonate films is shown in Table 3:

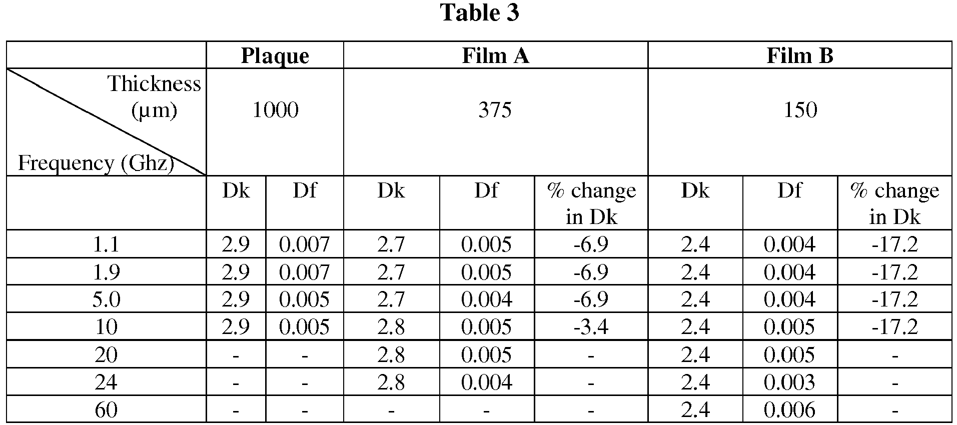

Due to limitations of the Dk and Df testing, dielectric performance of the comparative plaque sample above 10 Ghz and Film A at 60 Ghz was not possible. Based on the data presented, however, a decreasing trend of Dk with a reduction of thickness was observed between 1.1Ghz and 10Ghz. Specifically, Dk was reduced from 2.9 to 2.7 with a decrease in thickness from 1000 µm to 375 µm, and to 2.4 at a thickness of 150 µm. It is known that Dk values are already normalized for thickness, and thus Dk would not be expected to vary significantly with a decrease in thickness. The surprising data provided herein is believed to result from the macromolecular chain orientation of the thermoplastic polymer under restricted conditions such those encountered during very thin film formation. As described herein, Dk is an important parameter that affects performance of electronic devices such as an antenna or cable, so if the low Dk thin film disclosed here is optionally combined with other processes such as laminate, co-extrusion, thermo-forming or hot pressing, a new form of high performance antenna or cable is possible.

Dielectric performance of the polyetherimide films is shown in Table 4:

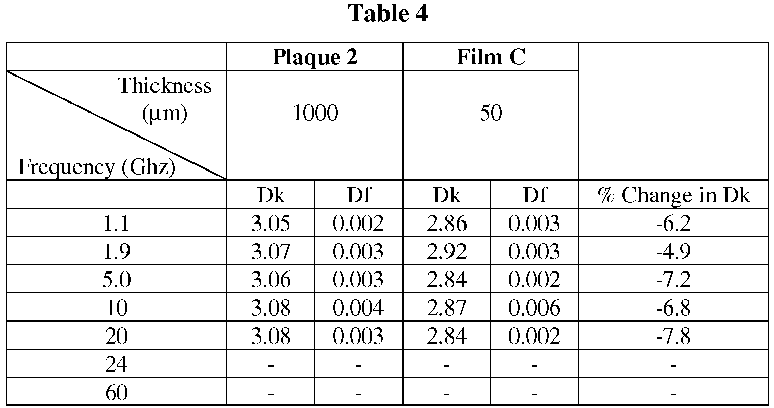

Similar to the polycarbonate examples, it was observed that when the film was reduced from 1000 µm (Plaque 2) to 50 µm (Film C), the dielectric constant was reduced by around 0.2 (at least about 5%). This represents a significant and useful reduction in certain applications.

Method examples described herein can be machine or computer-implemented at least in part. Some examples can include a computer-readable medium or machine-readable medium encoded with instructions operable to configure an electronic device to perform methods as described in the above examples. An implementation of such methods can include code, such as microcode, assembly language code, a higher-level language code, or the like. Such code can include computer readable instructions for performing various methods. The code may form portions of computer program products. Further, in an example, the code can be tangibly stored on one or more volatile, non-transitory, or non-volatile tangible computer-readable media, such as during execution or at other times. Examples of these tangible computer-readable media can include, but are not limited to, hard disks, removable magnetic disks, removable optical disks (e.g., compact disks and digital video disks), magnetic cassettes, memory cards or sticks, random access memories (RAMs), read only memories (ROMs), and the like.

The above description is intended to be illustrative, and not restrictive. For example, the above-described examples (or one or more aspects thereof) may be used in combination with each other. Other embodiments can be used, such as by one of ordinary skill in the art upon reviewing the above description. The Abstract is provided to comply with 37 C.F.R. §1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description as examples or embodiments, with each claim standing on its own as a separate embodiment, and it is contemplated that such embodiments can be combined with each other in various combinations or permutations. The scope of the invention should be determined with reference to the appended claims, along with the full scope of equivalents to which such claims are entitled.

## Claims

1. A thermoplastic film comprising a thermoplastic polymer component, wherein the thermoplastic film has a thickness of less than 200 micrometers (µm) and a dielectric constant (Dk) of 3.0 or less at a radio frequency of from 1 gigahertz (GHz) to 77 GHz.

2. The thermoplastic film according to claim 1, wherein the thermoplastic film is extruded.

3. The thermoplastic film according to claim 1 or 2, wherein the thermoplastic polymer component comprises polycarbonate, polyetherimide, liquid crystal polymer, polyamide, polyimide, polyester, copolymers thereof, or blends thereof.

4. The thermoplastic film according to any of claims 1 to 3, wherein the thermoplastic film is extruded and the Dk of the thermoplastic film is at least 0.2 lower than that of a substantially identical comparative injection molded thermoplastic film having a thickness of 1000 µm.

5. The thermoplastic film according to any of claims 1 to 4, wherein the thermoplastic film is extruded and the Dk of the thermoplastic film is at least 5% lower than that of a substantially identical comparative injection molded thermoplastic film having a thickness of 1000 µm.

6. The thermoplastic film according to any of claims 1 to 5, wherein the thermoplastic film is extruded and the Dk of the thermoplastic film is from 5% to 20% lower than that of a substantially identical comparative injection molded thermoplastic film having a thickness of 1000 µm.

7. The thermoplastic film according to any of claims 1 to 6, wherein the thermoplastic film further comprises a filler component.

8. The thermoplastic film according to claim 7, wherein the filler component comprises carbon fibers, glass fibers, ceramic fibers, milled fibers, minerals or a combination thereof.

9. An article comprising the thermoplastic film according to any of claims 1 to 8.

10. The article according to claim 9, wherein the article is a telecommunications device for use in a super high frequency (SHF) or extremely high frequency (EHF) frequency range.

11. A method for making a thermoplastic film comprising a thermoplastic polymer component, the method comprising extruding the thermoplastic film to a thickness of less than 200 micrometers (µm), wherein the thermoplastic film has a dielectric constant (Dk) of 3.0 or less at a radio frequency of from 1 gigahertz (GHz) to 77 GHz.

12. The method according to claim 11, wherein the thermoplastic polymer component comprises polycarbonate, polyetherimide, polyamide, liquid crystal polymer, polyimide, polyester, copolymers thereof, or blends thereof.

13. The method according to claim 11 or 12, wherein the Dk of the thermoplastic film is at least 0.2 lower or at least 5% lower than that of a substantially identical comparative injection molded thermoplastic film having a thickness of 1000 µm.

14. The method according to any of claims 11 to 13, wherein the Dk of the thermoplastic film is from 5% to 20% lower than that of a substantially identical comparative injection molded thermoplastic film having a thickness of 1000 µm.

15. The method according to any of claims 11 to 14, wherein the thermoplastic film further comprises a filler component comprising carbon fibers, glass fibers, ceramic fibers, milled fibers, minerals or a combination thereof.
